# EUROPÄISCHE PATENTSCHRIFT

(11) **EP 3 546 723 B1**
(45) Veröffentlichungstag und Bekanntmachung des Hinweises auf die Patenterteilung: **20.01.2021**
(21) Anmeldenummer: 19163726.3
(22) Anmeldetag: 19.03.2019
(51) Int. Cl.: F02B 75/04, F16C 7/06, F16K 11/07

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 29.03.2018 DE 102018107525; 16.07.2018 DE 102018117111
(43) Veröffentlichungstag der Anmeldung: 02.10.2019
(73) Patentinhaber: ECO Holding 1 GmbH, 97828 Marktheidenfeld (DE)
(72) Erfinder: Huber, David, 60486 Frankfurt am Main (DE); Schulze, Dietmar, 35516 Münzenberg (DE); Witopil, Mario, 97828 Marktheidenfeld (DE)

(56) Entgegenhaltungen:
- EP-A2- 3 211 256
- WO-A1-2018/006904
- WO-A2-2017/194050
- DE-A1-102012 020 999
- DE-A1-102016 217 983

## Beschreibung

### Technisches Gebiet

Die Erfindung betrifft ein Pleuel für eine Brennkraftmaschine mit variabler Verdichtung mit einer Verstelleinrichtung zur Verstellung einer effektiven Pleuelstangenlänge.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt. Zur Verstellung des Verdichtungsverhältnisses ist beispielsweise aus der DE 10 2005 055 199 A1 ein System mit variabler Pleuellänge bekannt.

Aus den Anmeldungen WO 2017/194050 A2, WO 2018/006904 A1, DE 10 2016 217 983 A1 und DE 10 2012 020 999 A1 sind Pleuel mit zwei Hydraulikkammern bekannt, welche in beiden Schaltstellungen direkt und über Mittel zum definierten Druckabfall verbindbar sind. Die Mittel sind in der hydraulischen Verbindung zwischen der ersten Hydraulikkammer und der zweiten Hydraulikkammer angeordnet und ermöglichen ein konstantes Absinkverhalten der Kolben.

### Offenbarung der Erfindung

Eine Aufgabe der Erfindung ist es, einen verbesserten Pleuel für eine Brennkraftmaschine mit variabler Verdichtung mit einer Exzenter-Verstelleinrichtung zur Verstellung einer effektiven Pleuelstangenlänge zu schaffen, welcher hinsichtlich des Betriebsverhaltens verbessert ist

Die vorgenannte Aufgabe wird mit den Merkmalen des unabhängigen Anspruchs gelöst.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung mit einer Verstelleinrichtung zur Verstellung einer effektiven Pleuelstangenlänge vorgeschlagen, wobei die Verstelleinrichtung wenigstens eine ersten Hydraulikkammer und eine zweite Hydraulikkammer aufweist und wobei sowohl jeweils ein Zulauf zum Zuführen von Hydraulikflüssigkeit in die Hydraulikkammern aus einer Versorgungsquelle als auch jeweils ein Ablauf zum Abführen von Hydraulikflüssigkeit von den Hydraulikkammern vorgesehen sind. Ein Umschaltventil zum Steuern eines Hydraulikflüssigkeitsstroms weist einen in einem Gehäuse beweglichen Kolben auf, welcher wahlweise in eine erste Schaltstellung oder eine zweite Schaltstellung verlagerbar ist. In der ersten Schaltstellung ist der Ablauf der zweiten Hydraulikkammer und in der zweiten Schaltstellung der Ablauf der ersten Hydraulikkammer mit der Versorgungsquelle verbunden. Den Hydraulikkammern ist jeweils ein Rückschlagventil zugeordnet, welches ein Zuführen von Hydraulikflüssigkeit in die Hydraulikkammern ermöglicht und ein Abführen von Hydraulikflüssigkeit von den Hydraulikkammern verhindert.

Die Hydraulikkammern derart verbunden, dass in der zweiten Schaltstellung Hydraulikflüssigkeit aus der ersten Hydraulikkammer in den zweiten Hydraulikkammerdirekt und über Mittel zum definierten Druckabfall leitbar ist, wobei die Mittel in der hydraulischen Verbindung zwischen der ersten Hydraulikkammer und der zweiten Hydraulikkammer angeordnet sind, und wobei ein Kammervolumen der zweiten Hydraulikkammer kleiner als ein Kammervolumen der ersten Hydraulikkammer ist. Definiert bedeutet dabei, dass der Druckabfall konstruktiv festgelegt ist.

Erfindungsgemäß ist die zweite Hydraulikkammer mittels einer Drossel hydraulisch vorspannbar, derart, dass in der zweiten Schaltstellung überschüssige Hydraulikflüssigkeit über die Drossel in die Lagerschale abführbar ist.
Das Differenzvolumen an Öl kann über die Drossel, die ein ungedrosseltes Ablaufen des Öls aus der GKS-Hydraulikkammer verhindert, in Richtung der Versorgungsquelle abgeleitet werden. Dadurch kann die Verstellgeschwindigkeit des Pleuels in Richtung der Stellung für niedrige Verdichtung (ε_{low}) begrenzt werden.

Durch den definierten Druckabfall werden der hydraulische wirkende Druck in der MKS- Hydraulikkammer und somit die max. auftretenden MKS-Kräfte reduziert.

Die Erfindung ermöglicht eine hydraulische Anordnung beim Betrieb des Pleuels mit einer Exzenter-Verstelleinrichtung zur Verstellung einer effektiven Pleuelstangenlänge, welche gewährleistet, dass in einer Schaltstellung für niedrige Verdichtung (ε_{low}) der Brennkraftmaschine das System in einem hydraulisch vorgespannten Zustand vorliegt. Das bedeutet, dass Hydraulikflüssigkeit, beispielsweise Motoröl, aus einer größeren Hydraulikkammer auf einer Gaskraftseite (GKS-Hydraulikkammer) des verstellbaren Pleuels direkt in eine kleinere Hydraulikkammer auf einer Massenkraftseite (MKS-Hydraulikkammer) geleitet wird. Dabei kann überschüssiges Öl über eine Drosselstelle in die Lagerschale abgeführt werden.

Gleichzeitig kann für den Schaltvorgang von der niedrigen Verdichtung (ε_{low}) nach der hohen Verdichtung (ε_{high}) gewährleistet werden, dass das System stets mit einer ausreichenden Menge Öl versorgt wird, sodass der Öldruck nicht zu weit einbricht. Ein Druckeinbruch kann direkt zu einem Ausgasen von Luft aus dem Öl führen, wodurch das System die hydraulische Vorspannung verliert. Dies könnte eine Destabilisierung des Exzenterhebelsystems zur Folge haben. Mit dem erfindungsgemäßen Umschaltventil kann vermieden werden, dass der Exzenterhebel während einer Umdrehung der Kurbelwelle eine große Amplitude ausführt, welche zu nahezu ungedämpften Schlägen der Stützkolben auf den Kammerboden oder die Ölsäule führt und schließlich sehr hohe Druckspitzen im System verursacht.

In der Stellung für hohe Verdichtung (ε_{high}) ist der Ablauf der MKS-Hydraulikkammer mit der Versorgungsquelle verbunden. Ablaufendes Öl aus der MKS-Hydraulikkammer kann von der GKS-Hydraulikkammer über das Rückschlagventil direkt wieder aufgenommen werden. Ist das MKS-Hydraulikkammervolumen kleiner als das GKS-Hydraulikkammervolumen, wird das Differenzvolumen an Öl über das versorgungsseitige Rückschlagventil nachgefördert. Der Ablauf aus der MKS-Hydraulikkammer erfolgt gedrosselt, um die Verstellgeschwindigkeit von der Stellung für niedrige Verdichtung (ε_{low}) in die Stellung für hohe Verdichtung (ε_{high}) zu begrenzen.

In der Stellung für hohe Verdichtung (ε_{high}) ist der Ablauf der GKS-Hydraulikkammer verschlossen. Leckageöl, das am Kolben auftreten kann, kann durch Bohrungen in den üblicherweise vorgesehenen Verschlussdeckeln des Umschaltventils in Richtung des Tanks abfließen.

In der Stellung für niedrige Verdichtung (ε_{low}) wird das Öl aus der GKS-Hydraulikkammer auf Grund der Bohrungen im Pleuel direkt vor das Rückschlagventil der MKS-Hydraulikkammer geleitet.

Beim Schaltvorgang von der hohen Verdichtung (ε_{high}) nach der niedrigen Verdichtung (ε_{low}) treten Prinzip-bedingt höhere dynamische Kräfte auf, als im statischen Auslegungsfall berücksichtigt werden. Durch den direkten Kurzschluss von GKS- und MKS- Kammer muss der gleiche Druck in GKS und MKS vorhanden sein. Diese Drucküberhöhung in der MKS-Kammer führt zu einer Verstärkung des Exzentermoments, wodurch wiederum höhere auf die GKS-Seite einwirkende Kräfte entstehen. Durch diesen Kurzschluss erhöht sich das Druckniveau in der GKS-Kammer.

Das Umschaltventil kann sowohl mechanisch als auch hydraulisch aktuiert ausgelegt sein und kann an beliebiger Stelle im Pleuel angeordnet sein.

Vorteilhaft kann in der Stellung hoher Verdichtung ε_{high} des Pleuels der Ablauf der GKS-Kammer durch das Umschaltventil geschlossen sein. Über das der GKS-Kammer zugeordnete Rückschlagventil kann Hydraulikflüssigkeit fließen. Dabei ist das Rückschlagventil so angeordnet, dass ein Hydraulikflüssigkeitsfluss nur in Befüllungsrichtung möglich ist. Damit kann der GKS-Kammer Hydraulikflüssigkeit zugeführt werden. Der Ablauf der MKS-Kammer ist über das Umschaltventil geöffnet. Der Hydraulikflüssigkeitsstrom wird über die Drosselstelle begrenzt. Ein Hydraulikflüssigkeitsfluss ist in beide Strömungsrichtungen möglich. Über das der MKS-Kammer zugeordnete Rückschlagventil kann ein Hydraulikflüssigkeitsfluss nur in Befüllungsrichtung erfolgen. Der Hydraulikflüssigkeitsstrom wird durch die Drosselstelle in dem Zulauf zur GKS-Kammer begrenzt. Dadurch kann Hydraulikflüssigkeit aus der MKS-Kammer abgeführt werden, und die MKS-Kammer kann sich entleeren.

Vorteilhaft kann in der Stellung niedriger Verdichtung (ε_{low}) des Pleuels der Ablauf der GKS-Kammer durch das Umschaltventil geöffnet sein. Der Hydraulikflüssigkeitsstrom kann in Richtung des der MKS-Kammer zugeordneten Rückschlagventils fließen. Der überschüssige Hydraulikflüssigkeitsstrom in Richtung Lagerschale des Pleuels kann durch die geeignet angeordnete Drosselstelle begrenzt sein. Über das der GKS-Kammer zugeordnete Rückschlagventil kann Hydraulikflüssigkeit fließen. Dabei ist das Rückschlagventil so angeordnet, dass ein Hydraulikflüssigkeitsfluss nur in Befüllungsrichtung möglich ist. Dadurch kann sich die GKS-Kammer entleeren. Der Ablauf der MKS-Kammer ist durch das Umschaltventil geschlossen. Über das der MKS-Kammer zugeordnete Rückschlagventil kann Hydraulikflüssigkeit fließen. Dabei ist das Rückschlagventil so angeordnet, dass ein Hydraulikflüssigkeitsfluss nur in Befüllungsrichtung möglich ist. Auf diese Weise kann sich die MKS-Kammer füllen.

Mit der Hydraulikanordnung mit einem Umschaltventil zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge kann so ein stabiles Umschaltverhalten des Pleuels erreicht werden.

Vorteilhaft kann wenigstens das der MKS-Kammer zugeordnete Rückschlagventil in dem Abgreifer des Umschaltventils integriert sein. Auch können eine oder mehrere Drosselstellen in den Hydraulikleitungen im Abgreifer, beispielsweise durch Verengungen in den Hydraulikleitungen, integriert sein. Auf diese Weise lässt sich der benötigte Bauraum der Hydraulikanordnung möglichst kompakt gestalten.

Optional kann in der zweiten Schaltstellung Hydraulikflüssigkeit aus der zweiten Hydraulikkammer in der ersten Hydraulikkammer leitbar sein. Günstigerweise kann so die Hydraulikflüssigkeit, beispielsweise Motoröl, aus der MKS-Kammer zum Befüllen der GKS-Kammer verwendet werden, so dass das nötige Hydraulikflüssigkeit nicht gänzlich aus der Hydraulikversorgung, beispielsweise der Lagerschale des Pleuels nachgefördert werden muss.

Der Ablauf der zweiten Hydraulikkammer kann wenigstens eine Drosselstelle aufweisen. Auf diese Weise kann in der Stellung für hohe Verdichtung ε_{high} des Hydraulikflüssigkeitsstroms in Richtung der GKS-Kammer begrenzt werden, wodurch ein stabiles Umschaltverhalten des Pleuels erreicht werden kann. Ebenso kann zwischen der Versorgungsleitung und dem Zulauf der zweiten Hydraulikkammer eine Drosselstelle angeordnet sein. Durch diese Drosselstelle kann in der Stellung für niedrige Verdichtung ε_{low} der Anteil der Hydraulikflüssigkeit, der in Richtung Hydraulikversorgung abgezweigt wird, begrenzt werden, so dass vorteilhaft zur Befüllung der MKS-Kammer der größere Anteil der Hydraulikflüssigkeit, das aus der GKS-Kammer abfließt, genutzt werden kann.

Das Umschaltventil, die Drosselstellen und/oder wenigstens eines der Rückschlagventile können in einem abgeschlossenen Hydraulikmodul integriert sein. Wenigsten das der MKS-Kammer zugeordnete Rückschlagventil, das Umschaltventil und/oder Drosselstellen können in einem separaten Hydraulikmodul integriert sein, welches als Ganzes in einen Pleuel montiert werden kann. Dadurch könnte die Pleuelbearbeitung vorteilhaft vereinfacht werden.

Vorteilhaft kann wenigstens eine der Drosselstellen in das Umschaltventil integriert sein. Günstigerweise können Drosselstellen in den Hydraulikleitungen im Abgreifer des Umschaltventils oder auch im Ventilkörper, beispielsweise durch Verengungen in den Hydraulikleitungen, integriert sein. Auf diese Weise lässt sich der benötigte Bauraum der Hydraulikanordnung möglichst kompakt gestalten.

Günstigerweise kann wenigstens eines der Rückschlagventile und/oder wenigstens eine der Drosselstellen in das Umschaltventil integriert sein. Vorteilhaft kann wenigstens das der MKS-Kammer zugeordnete Rückschlagventil in dem Abgreifer oder im Ventilkörper des Umschaltventils integriert sein. Auch Drosselstellen können in den Hydraulikleitungen im Abgreifer oder im Ventilkörper, beispielsweise durch Verengungen in den Hydraulikleitungen integriert sein. Auf diese Weise lässt sich der benötigte Bauraum der Hydraulikanordnung möglichst kompakt gestalten.

Dadurch kann die Verstellgeschwindigkeit des Pleuels in Richtung der Stellung für niedrige Verdichtung (ε_{low}) begrenzt werden.

Die Volumina der beiden Hydraulikkammern können auch gleich gewählt sein.

Gemäß einer vorteilhaften Ausgestaltung kann in der zweiten Schaltstellung Hydraulikflüssigkeit aus dem ersten Hydraulikkammerüber Mittel zum definierten Druckabfall in den zweiten Hydraulikkammerleitbar sein, wobei die Mittel in der hydraulischen Verbindung zwischen der ersten Hydraulikkammer und der zweiten Hydraulikkammer angeordnet sein können. Vorteilhaft kann eine Drucküberhöhung in der zweiten Hydraulikkammer abgebaut werden und ein stabileres Verhalten des Pleuels beim Umschalten erreicht werden.

Gemäß einer vorteilhaften Ausführungsform der Erfindung können die Mittel zum definierten Druckabfall durch das Rückschlagventil der zweiten Hydraulikkammer gebildet sein. Das Rückschlagventil selbst erzeugt den Druckabfall im Hydraulikflüssigkeitsfluss. Definiert werden kann der Druckabfall beispielsweise mittels einer Hubbegrenzung.

Vorzugsweise sind die Mittel zum definierten Druckabfall als Blende vorgesehen. Die dadurch verursachte, definierte Drosselung des Hydraulikflüssigkeitsflusses durch die Blende ist dabei bevorzugt so ausgestaltet, dass sie einer so genannten idealen Blende möglichst nahekommt. Bei einem derartigen Element ist der Strömungswiderstand idealerweise unabhängig von der Viskosität der durchströmenden Hydraulikflüssigkeit. Vorteilhaft kann dieses Verhalten durch eine Blende nachgebildet oder zumindest angenähert werden, deren Strömungskanal für die Hydraulikflüssigkeit möglichst kurz ist.

Günstigerweise kann die Blende vor dem Rückschlagventil der zweiten Hydraulikkammer angeordnet sein. Insbesondere kann die Blende zwischen dem Rückschlagventil der zweiten Hydraulikkammer und einem Verzweigungspunkt angeordnet sein, an welchem der Zulauf der zweiten Hydraulikkammer mit dem Ablauf der ersten Hydraulikkammer verbunden ist. Die Blende kann separat vorgesehen sein.

Gemäß einer vorteilhaften Ausgestaltung kann die Blende im Ablauf der ersten Hydraulikkammer vor einem Verzweigungspunkt angeordnet sein, an welchem der Zulauf der zweiten Hydraulikkammer mit dem Ablauf der ersten Hydraulikkammer verbunden ist. Dies erlaubt eine bedarfsgerechte Positionierung der Blende.

Optional kann eine Blende sowohl vor als auch hinter dem Verzweigungspunkt vorgesehen sein.

Gemäß einer vorteilhaften Ausgestaltung ist die Blende in das Rückschlagventil integriert vorgesehen. Die Blende könnte dabei in einfacher Weise als verjüngte Ansaugbohrung im Rückschlagventil vorgesehen werden. Ein zusätzliches Bauteil muss nicht vorgesehen werden. Dabei ist ebenfalls denkbar, die Blende als Blendeneinsatz in das Rückschlagventil zu integrieren. Die Integration in das Rückschlagventil erlaubt einen kompakten Aufbau des Rückschlagventils mit der zusätzlichen Funktion einer gezielten Drosselung des Durchflusses der Hydraulikflüssigkeit.

Gemäß einer weiteren vorteilhaften Ausgestaltung kann die Blende als verjüngte Bohrung im Pleuel angeordnet sein. Je nach Ausgestaltung des Pleuels und Verlauf der Hydraulikflüssigkeitsleitungen kann die Blende hierdurch in einfacher Weise im Pleuel vorgesehen werden.

Gemäß einer weiteren vorteilhaften Ausgestaltung kann die Blende als Blendeneinsatz im Pleuel angeordnet sein. Eine eventuell aufwendige Bearbeitung des Pleuels kann dadurch vermieden werden.

Gemäß einer vorteilhaften Ausgestaltung kann die Blende dergestalt ausgebildet ist, dass ihr Strömungswiderstand im Wesentlichen unabhängig von einer Viskosität der durchströmenden Hydraulikflüssigkeit. Dies erlaubt eine hohe Genauigkeit und Bestimmbarkeit bei der Drosselung des Durchflusses der Hydraulikflüssigkeit.

Gemäß einer vorteilhaften Ausgestaltung kann in dem Ablauf der zweiten Hydraulikkammer eine Drosselstelle angeordnet sein. Auf diese Weise kann die Verstellgeschwindigkeit des Pleuels in Richtung hoher Verdichtung begrenzt werden.

Gemäß einer vorteilhaften Ausgestaltung kann das Umschaltventil als 4/2 WegeVentil ausgestaltet sein. Eingangskanäle des Umschaltventils sind die beiden Ablaufkanäle der GKS-Hydraulikkammer und der MKS-Hydraulikkammer, welche in den zwei Schaltstellung wahlweise auf die Versorgungsquelle und den Zulauf der MKS-Hydraulikkammer geschaltet werden können.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Draufsicht eines erfindungsgemäßen Pleuels mit eingezeichneter Schnittebene B-B;
- Fig. 2: einen Längsschnitt entlang der Schnittebene B-B durch den Pleuel gemäß Fig. 1;
- Fig. 3: einen hydraulischen Schaltplan einer ersten Ausführungsform des erfindungsgemäßen Pleuels gemäß den Figuren 1 und 2 in der ersten Schaltstellung;
- Fig. 4: den hydraulischen Schaltplan der ersten Ausführungsform des erfindungsgemäßen Pleuels gemäß den Figuren 1 und 2 in der zweiten Schaltstellung;
- Fig. 5: einen hydraulischen Schaltplan einer weiteren Ausführungsform des erfindungsgemäßen Pleuels gemäß den Figuren 1 und 2 in der ersten Schaltstellung;
- Fig. 6: den hydraulischen Schaltplan der weiteren Ausführungsform des erfindungsgemäßen Pleuels gemäß den Figuren 1 und 2 in der zweiten Schaltstellung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

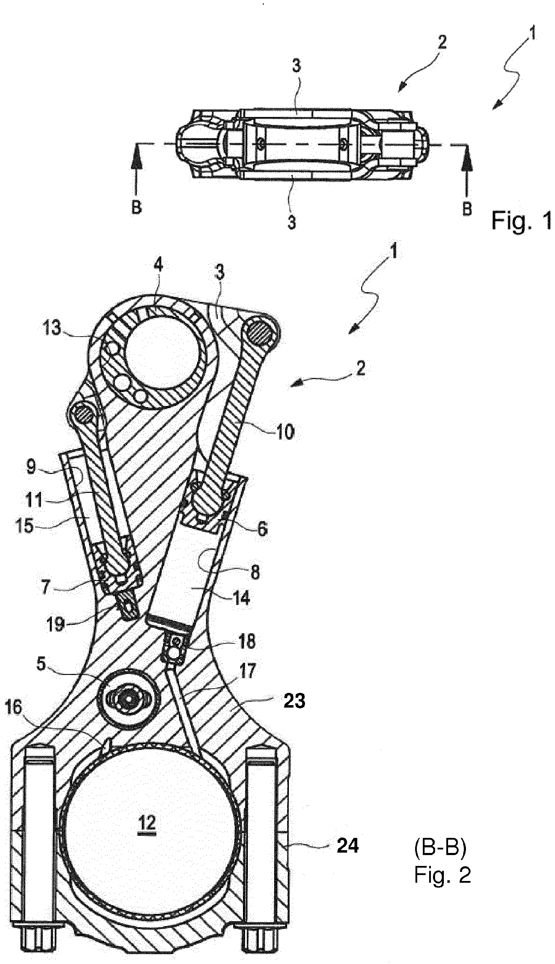

Der erfindungsgemäße Pleuel 1 für eine Brennkraftmaschine mit variabler Verdichtung ist beispielhaft den Figuren 1 (Draufsicht) und 2 (Längsschnitt in der Schnittebene B-B) zu entnehmen. Dieses weist eine Exzenter-Verstelleinrichtung 2 zur Verstellung einer effektiven Pleuelstangenlänge auf, welche als Abstand der Mittelachse eines Hublagerauges 12 von der Mittelachse der Bohrung eines in einem Pleuellagerauge 13 angeordneten Exzenters 4 definiert ist. Die Exzenter-Verstelleinrichtung 2 weist den mit einem ein oder mehrteiligen Exzenterhebel 3 zusammenwirkenden Exzenter 4 auf, in welchem ein nicht gezeigter Kolbenbolzen eines Zylinderkolbens aufgenommen ist. Ein Verstellweg der Exzenter-Verstelleinrichtung 2 ist mittels eines Umschaltventils 5 hydraulisch verstellbar.

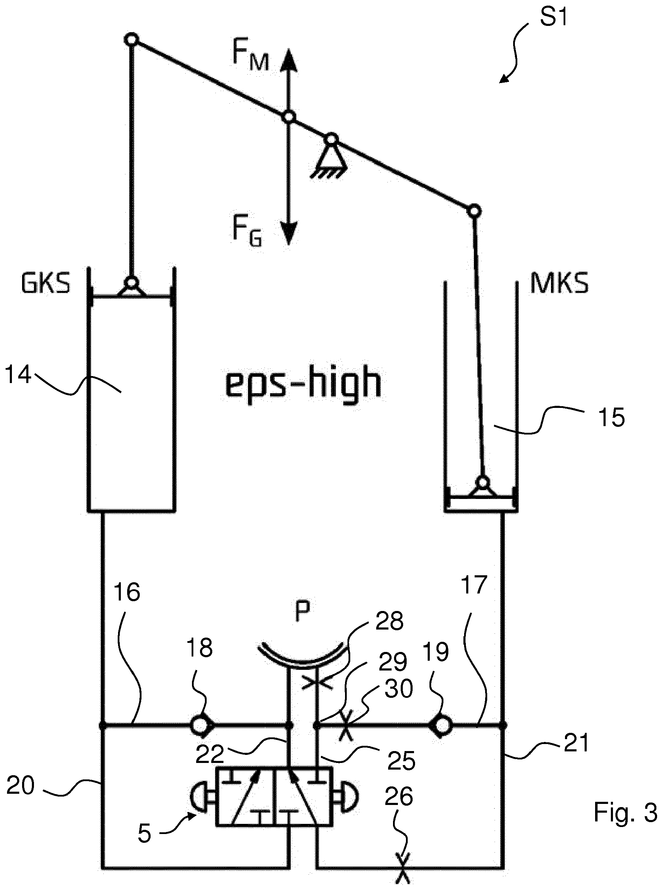

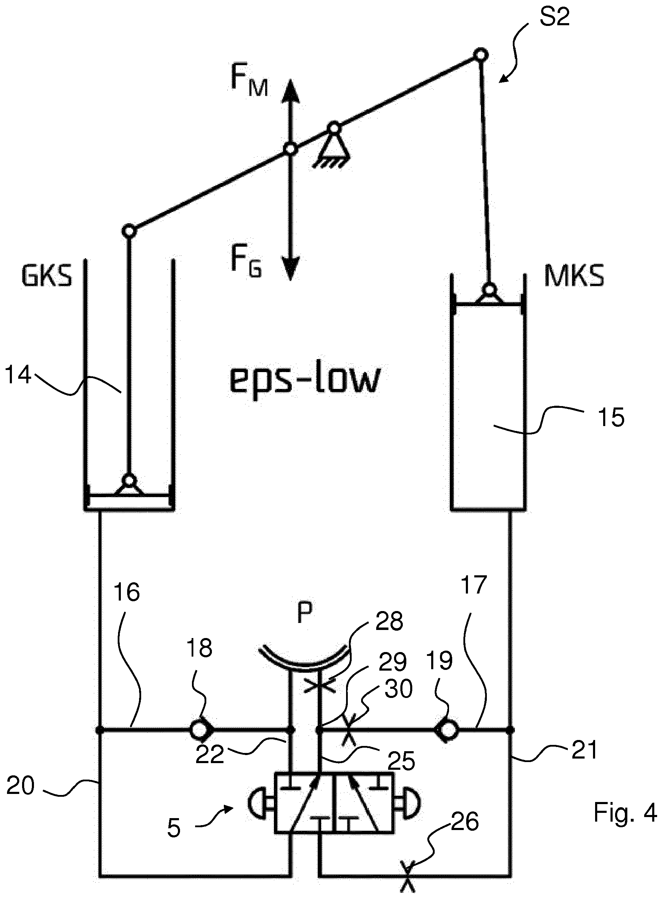

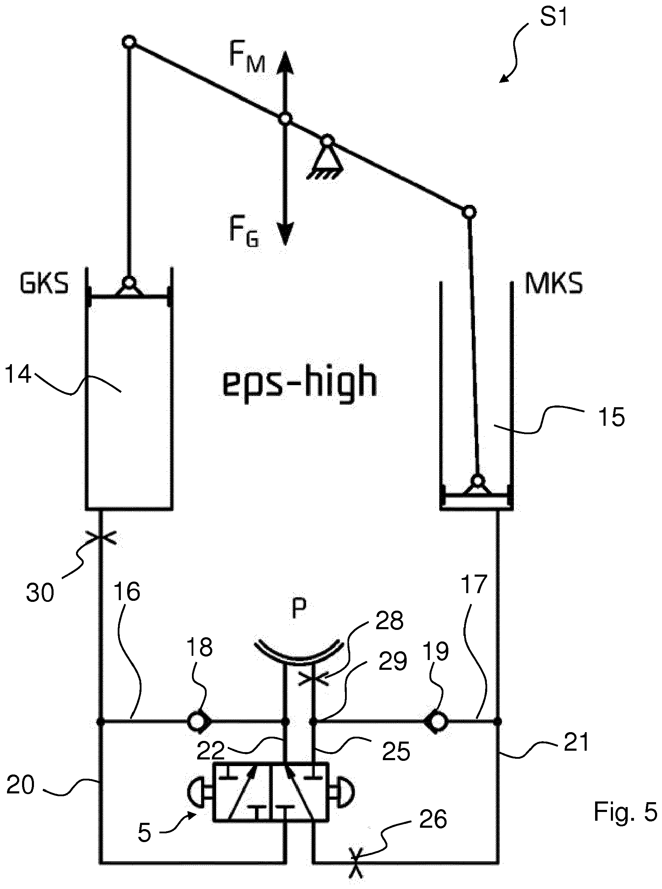

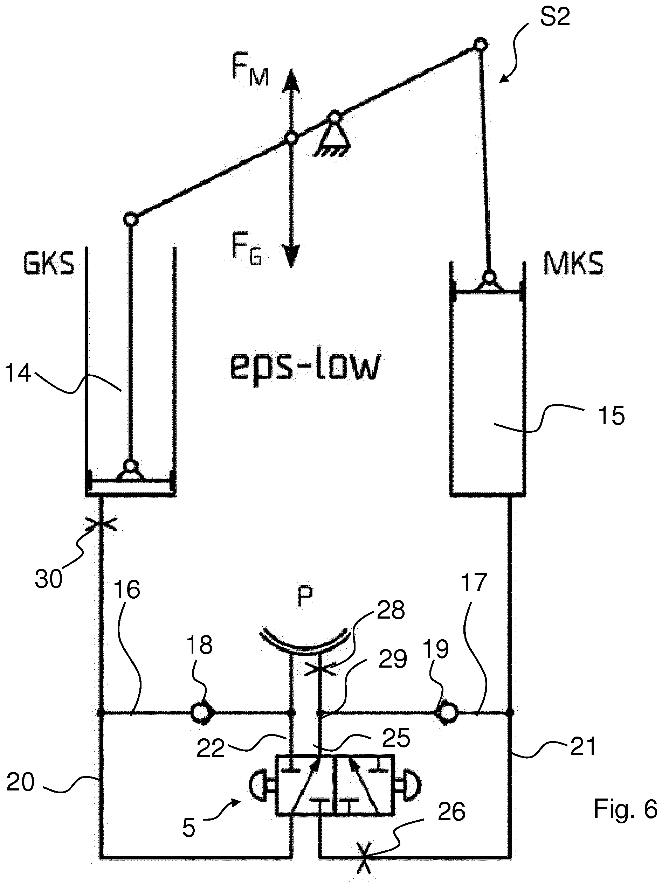

Das Umschaltventil 5 dient zum Steuern eines Hydraulikflüssigkeitsstroms des Pleuels 1 mit der Verstelleinrichtung 2 zur Verstellung einer effektiven Pleuelstangenlänge. Die Verstelleinrichtung 2 kann beispielsweise eine dargestellte Exzenter-Verstelleinrichtung mit Zylindern sein. Andere Verstellvarianten sind im Rahmen der Erfindung ebenso denkbar, so dass die Erfindung nicht hierauf beschränkt ist.
Die Exzenter-Verstelleinrichtung weist dazu wenigstens einen ersten Zylinder mit einer ersten Hydraulikkammer 14 und einen zweiten Zylinder mit einer zweiten Hydraulikkammer 14 auf. Sowohl jeweils ein Zulauf 16, 17 zum Zuführen von Hydraulikflüssigkeit in die Zylinder aus einer Versorgungsquelle P als auch jeweils ein Ablauf 20, 21 zum Abführen von Hydraulikflüssigkeit von den Zylindern sind dabei vorgesehen. Das Umschaltventil 5 weist einen in einem Gehäuse beweglichen Kolben auf, welcher wahlweise in eine erste Schaltstellung S1 oder eine zweite Schaltstellung S2 verlagerbar ist, welche jeweils als hydraulischer Schaltplan des Pleuels 1 in den Figuren 3 und 4 bzw. in anderer Ausgestaltung in den Figuren 5 und 6 dargestellt sind.

In der ersten Schaltstellung S1 ist der Ablauf 21 des zweiten Zylinders und in der zweiten Schaltstellung S2 der Ablauf 20 des ersten Zylinders über das Umschaltventil 5 mit der Versorgungsquelle P verbunden. Den Zylindern ist jeweils ein Rückschlagventil 18, 19 zugeordnet, welches ein Zuführen von Hydraulikflüssigkeit in die Zylinder ermöglicht und ein Abführen von Hydraulikflüssigkeit von den Zylindern verhindert. Die Zylinder sind derart verbunden, dass in der zweiten Schaltstellung S2 Hydraulikflüssigkeit aus dem ersten Zylinder in den zweiten Zylinder direkt und mit einem definierten Druckabfall leitbar ist. Ein definierter Druckabfall bedeutet erfindungsgemäß, dass der Druckabfall konstruktiv festgelegt ist. Auch ein Durchströmen des Umschaltventils 5 kann zwar eine Drosselung hervorrufen, diese wird jedoch als nicht definiert angesehen. Der definierte Druckabfall wird erfindungsgemäß durch Mittel erzielt, welche in der Verbindung zwischen dem ersten und dem zweiten Zylinder vorgesehen sind.
Diese Mittel zum definierten Druckabfall können beispielsweise durch das Rückschlagventil 19 des zweiten Zylinders selbst gebildet werden oder als Blende 30 vorgesehen sein.

Vorzugsweise sind der Druckabfall und die dadurch entstehende definierte Drosselung durch die Blende 30 verursacht, die besonders bevorzugt so ausgestaltet ist, dass sie einer so genannten idealen Blende möglichst nahekommt. Bei einem derartigen Element ist der Strömungswiderstand idealerweise unabhängig von der Viskosität der durchströmenden Hydraulikflüssigkeit. Vorteilhaft kann dieses Verhalten durch eine Blende 30 nachgebildet oder zumindest angenähert werden, deren Strömungskanal für die Hydraulikflüssigkeit möglichst kurz ist.

Ein Kammervolumen der zweiten Hydraulikkammer 15 ist kleiner als ein Kammervolumen der ersten Hydraulikkammer 14, wodurch die zweite Hydraulikkammer 15 hydraulisch vorspannbar ist.

Eine Verdrehung der verstellbaren Exzenter-Verstelleinrichtung 2 wird durch Einwirken von Massenkräften (in den beiden Ausführungsformen der Figuren 3 bis 6 mit FM bezeichnet) und Gaslastkräften (in den beiden Ausführungsformen der Figuren 3 bis 6 mit FG bezeichnet) der Brennkraftmaschine initiiert, die bei einem Arbeitstakt der Brennkraftmaschine auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte.

Die Kolben 6, 7 sind jeweils in Zylinderbohrungen 8, 9 von Hydraulikzylindern des Pleuels 1 verschiebbar geführt und mit Stützstangen 10, 11 verbunden, welche ihrerseits mit dem Exzenterhebel 3 gelenkig verbunden sind.

Der Pleuel 1 weist das Hublagerauge 12 zur Anbindung des Pleuels 1 an eine Kurbelwelle einer Brennkraftmaschine sowie ein Pleuellagerauge 13 zur Anbindung des Pleuels 1 an den Zylinderkolben der Brennkraftmaschine auf.

Die Kolben 6, 7 sind in den durch die Zylinderbohrungen 8, 9 gebildeten Hydraulikkammern 14, 15 verschiebbar angeordnet und über Zuläufe 16, 17 von dem Hublagerauge 12 aus mit Hydraulikflüssigkeit, beispielsweise Motoröl über Rückschlagventile 18, 19 beaufschlagt. Diese verhindern dabei ein Rückfließen der Hydraulikflüssigkeit aus den Hydraulikkammern 14, 15 zurück in die Zuläufe 16, 17, ermöglichen jedoch ein Nachsaugen von Hydraulikflüssigkeit in die Hydraulikkammern 14, 15.

Die Hydraulikkammern 14, 15 sind weiter über in den hydraulischen Schaltplänen des Pleuels 1 in den Figuren 3 und 4 bzw. Figuren 5 und 6 dargestellten Abläufe 20, 21 mit dem Umschaltventil 5 verbunden, welches als beispielsweise als mechanischer Schalter oder als Hydraulikventil ausgebildet ist, und über eine Ablaufleitung 22 mit dem Hublagerauge 12 bzw. einer Lagerschale verbunden ist.

Wie beispielsweise aus Figur 2 ersichtlich ist, weist der Pleuel 1 einen Pleuelkörper 23 und einen daran befestigten Pleueldeckel 24 auf.

Die Zylinderbohrung 8 stellt die Hydraulikkammer 14 auf der Gaskraftseite (GKS) des Pleuels 1 dar, während die Zylinderbohrung 9 die Hydraulikkammer 15 auf der Massenkraftseite (MKS) des Pleuels 1 darstellt.

Wie aus den Figuren 3 und 4 wie auch den Figuren 5 und 6 ersichtlich ist, ist das Umschaltventil 5 als 4/2-Wege-Ventil ausgebildet. Eingangskanäle des Umschaltventils 5 sind die beiden Ablaufkanäle 20 und 21 der GKS-Hydraulikkammer 14, bzw. der MKS-Hydraulikkammer 15, welche in den zwei Schaltstellungen S1 und S2 wahlweise auf die Versorgungsquelle P und einen Zulauf 25 der MKS-Hydraulikkammer 15 geschaltet werden können.

Eine Drosselstelle 26 ist dabei im Ablauf 21 des zweiten Zylinders angeordnet. Auf diese Weise kann die Verstellgeschwindigkeit des Pleuels in Richtung hoher Verdichtung (ε_{high}), in der Figur als eps_high angegeben, begrenzt werden.

Der Ablauf 21 ist mit der Ablaufleitung 22 verbunden, so dass ablaufendes Öl aus der MKS-Hydraulikkammer 15 von der GKS-Hydraulikkammer 14 über das Rückschlagventil 18 wieder aufgenommen werden.

In der in Figur 3 wie auch in der Ausgestaltung der Figur 5 gezeigten Schaltstellung des Umschaltventils 5 befindet sich der Pleuel 1 in der Schaltstellung S1 für hohe Verdichtung (ε_{high}). In diesem Betriebszustand ist die GKS-Hydraulikkammer 14 mit Hydraulikflüssigkeit/Öl gefüllt und die MKS-Hydraulikkammer 15 ist über den Ablauf 21 sowie über das Umschaltventil 5 gedrosselt mit einer Versorgungsquelle P bzw. der Lagerschale des Pleuels 1 verbunden.

In der in Figur 4 wie auch in der Ausgestaltung der Figur 6 gezeigten Schaltstellung des Umschaltventils 5 befindet sich der Pleuel 1 in der Schaltstellung S2 für niedrige Verdichtung (ε_{low}), in der Figur als eps_low angegeben. In diesem Betriebszustand ist die GKS-Hydraulikkammer 14 über den Ablauf 20 sowie über das Umschaltventil 5 und den Zulauf 25 mit der MKS-Hydraulikkammer 15 verbunden und deshalb die MKS-Hydraulikkammer 15 mit Hydraulikflüssigkeit/Öl gefüllt.

In der zweiten Schaltstellung S2 ist eine Überströmleitung 27 mit der Versorgungsquelle P verbunden.

Da die GKS-Hydraulikkammer 14 ein größeres Kammervolumen als die MKS-Hydraulikkammer 15 aufweist, wird der überschüssige Volumenstrom Richtung Versorgungsquelle P, beispielsweise die Lagerschale des Pleuels 1, durch eine Drossel 28 geleitet. Der dabei entstehende Druck ist bei richtiger Dimensionierung der Drossel 28 wesentlich höher als der Versorgungsdruck und liegt auch vor dem Rückschlagventil 19 der MKS-Hydraulikkammer 15 an, womit ein sicheres Befüllen der MKS-Hydraulikkammer 15 gewährleistet wird. Auf diese Weise ist die hydraulische Vorspannung gewährleistet.

Gleichzeitig bewirkt die Drossel 28 eine Begrenzung der Geschwindigkeit, mit welcher der GKS-Kolben 6 auf dem Kammerboden der GKS-Hydraulikkammer 14 auftrifft. Wie aus den Figuren 3 und 4 und auch den Figuren 5 und 6 zu entnehmen ist, ist die Drossel 28 zwischen einem Verzweigungspunkt 29 und der Versorgungsquelle P angeordnet, wobei an dem Verzweigungspunkt 29 der Zulauf 17 des zweiten Zylinders mit dem Ablauf 20 bzw. dem nachgeschalteten Zulauf 25 verbunden ist. Beim Schaltvorgang von der hohen Verdichtung (ε_{high}) nach der niedrigen Verdichtung (ε_{low}) treten Prinzip-bedingt höhere dynamische Stützstangen-Kräfte auf als im statischen Auslegungsfall berücksichtigt werden. Durch den direkten Kurzschluss von GKS- und MKS-Hydraulikkammer muss der gleiche Druck in GKS und MKS vorhanden sein. Diese Drucküberhöhung in der MKS-Hydraulikkammer 15 führt zu einer Verstärkung des Exzentermoments über die MKS-Stützstange 11, wodurch wiederum höhere auf die GKS-Stützstange 10 einwirkende Kräfte entstehen. Durch diesen Kurzschluss erhöht sich das Druckniveau in der GKS-Hydraulikkammer 14 je nach geometrischen Bedingungen ca. um den Faktor 2,2 im Verhältnis zum Auslegungsfall (max. Gaskraft, low end Torque, bei ideal dichter Hydraulikkammer).

Durch die Drosselung der in Richtung des zweiten Zylinders geleitete Hydraulikflüssigkeit in der zweiten Schaltstellung S2 wird erfindungsgemäß ein definierter Druckabfall herbeigeführt, wodurch der hydraulische wirkende Druck in der MKS-Hydraulikkammer 15 und somit die max. auftretenden MKS-Kräfte reduziert werden können. Durch die Drosselung ist es möglich, die max. auftretenden MKS-Stützstangenkräfte beim Umschaltvorgang für MKS-vorgespannte Hydraulikanordnungen soweit zu reduzieren, dass sie den statischen Auslegungsfall (Leerlast, max. Drehzahl → max. Massenkräfte in Zugrichtung) nicht mehr überschreiten.

Der definierte Druckabfall bzw. die Drosselung der aus dem ersten Zylinder in den zweiten Zylinder geleiteten Hydraulikflüssigkeit erfolgt über eine Blende 30, wobei die Blende 30 vor dem Rückschlagventil 19 des zweiten Zylinders angeordnet ist. Vorzugsweise weist die Blende 30 einen möglichst kurzen Strömungsweg auf, so dass der Durchfluss der Hydraulikflüssigkeit möglichst viskoseunabhängig gedrosselt wird.
Grundsätzlich kann der definierte Druckabfall im Rahmen der Erfindung ebenso durch andere konstruktive Mittel bzw. Maßnahmen, wie beispielsweise eine Hubbegrenzung des Rückschlagventils 19 des zweiten Zylinders, erzielt werden.

Wie der Ausgestaltung in den Figuren 3 und 4 zu entnehmen ist, ist die Blende 30 konkret zwischen dem Rückschlagventil 19 des zweiten Zylinders und dem Verzweigungspunkt 29 angeordnet, an welchem der Zulauf 17 des zweiten Zylinders mit dem Ablauf 20 des ersten Zylinders bzw. dem nachgeschalteten Zulauf 25 verbunden ist. Die Anordnung der Blende 30 ist nicht zwingend an der oben genannten Position erforderlich. Grundsätzlich kann die Blende in der gesamten hydraulischen Verbindungsstrecke zwischen dem Ablauf des ersten Hydraulikzylinders 14 und dem Zulauf des zweiten Hydraulikzylinders 15 angeordnet sein. So ist die Anordnung der Blende 30 beispielhaft auch im Ablauf 20 möglich. Eine Integration in das Umschaltventil 5 ist ebenso im Rahmen der Erfindung denkbar.

Gemäß einem Ausführungsbeispiel kann die Blende 30 in das Rückschlagventil 19 integriert vorgesehen sein. Die Blende 30 könnte dabei in einfacher Weise als verjüngte Ansaugbohrung im Rückschlagventil 19 vorgesehen werden, wodurch kein zusätzliches Bauteil vorgesehen werden muss.

Alternativ kann die Blende 30 jedoch als Blendeneinsatz in das Rückschlagventil 19 integriert werden, wobei der Blendeneinsatz in das Rückschlagventil 19 beispielsweise geschraubt, verpresst oder verklebt werden kann, so dass eine vormontierte Baugruppe entsteht. Andere Befestigungsverfahren sind ebenfalls denkbar.

Gemäß einem weiteren Ausführungsbeispiel kann die Blende 30 als verjüngte Bohrung im Pleuelkörper 23 oder im Pleueldeckel 24 angeordnet sein. Je nach Ausgestaltung des Pleuels und Verlauf der Hydraulikflüssigkeitsleitungen kann die Blende 30 hierdurch in einfacher Weise im Pleuel 1 vorgesehen werden.

Gemäß einem weiteren, alternativen Ausführungsbeispiel kann die Blende 30 als Blendeneinsatz im Pleuelkörper 23 oder im Pleueldeckel 24 angeordnet sein wobei der Blendeneinsatz in den Pleuelkörper 23 oder den Pleueldeckel 24 beispielsweise geschraubt, verpresst oder verklebt werden kann. Weitere Befestigungsmöglichkeiten sind dabei denkbar.

Die Figuren 5 und 6 zeigen eine weitere Ausführungsform des erfindungsgemäßen Pleuels 1. Die Funktionsweise ist ähnlich wie in der Ausführungsform in den Figuren 3 und 4.

Wie den Figuren 5 und 6 zu entnehmen ist, ist die Blende 30 konkret zwischen dem ersten Zylinder und dem Verzweigungspunkt 29 angeordnet, an welchem der Zulauf 17 des zweiten Zylinders mit dem Ablauf 20 des ersten Zylinders bzw. dem nachgeschalteten Zulauf 25 verbunden ist. Die Anordnung der Blende 30 ist nicht zwingend an der oben genannten Position erforderlich. Grundsätzlich kann die Blende 30 in der gesamten hydraulischen Verbindungsstrecke zwischen dem Ablauf des ersten Hydraulikzylinders 14 und dem Zulauf des zweiten Hydraulikzylinders 15 angeordnet sein. So ist die Anordnung der Blende 30 beispielhaft auch im Ablauf 20 möglich. Eine Integration in das Umschaltventil 5 ist ebenso im Rahmen der Erfindung denkbar.

Gemäß einem Ausführungsbeispiel kann die Blende 30 als verjüngte Bohrung im Pleuelkörper 23 oder im Pleueldeckel 24 angeordnet sein. Je nach Ausgestaltung des Pleuels 1 und dem Verlauf der Hydraulikflüssigkeitsleitungen kann die Blende 30 hierdurch in einfacher Weise im Pleuel 1 vorgesehen werden.

Gemäß einem weiteren, alternativen Ausführungsbeispiel kann die Blende 30 als Blendeneinsatz im Pleuelkörper 23 oder im Pleueldeckel 24 angeordnet sein wobei der Blendeneinsatz in den Pleuelkörper 23 oder den Pleueldeckel 24 beispielsweise geschraubt, verpresst oder verklebt werden kann. Weitere Befestigungsmöglichkeiten sind dabei denkbar.

## Patentansprüche

1. Pleuel (1) für eine Brennkraftmaschine mit variabler Verdichtung mit einer Verstelleinrichtung (2) zur Verstellung einer effektiven Pleuelstangenlänge, wobei die Verstelleinrichtung (2) wenigstens eine erste Hydraulikkammer (14) und eine zweite Hydraulikkammer (15) aufweist und
wobei sowohl jeweils ein Zulauf (16, 17) zum Zuführen von Hydraulikflüssigkeit in die Hydraulikkammern (14, 15) aus einer Versorgungsquelle (P) als auch jeweils ein Ablauf (20, 21) zum Abführen von Hydraulikflüssigkeit von den Hydraulikkammern (14, 15) vorgesehen sind,
wobei ein Umschaltventil (5) zum Steuern eines Hydraulikflüssigkeitsstroms einen in einem Gehäuse beweglichen Kolben aufweist, welcher wahlweise in eine erste Schaltstellung (S1) oder eine zweite Schaltstellung (S2) verlagerbar ist,
wobei in der ersten Schaltstellung (S1) der Ablauf (21) der zweiten Hydraulikkammer (15) und in der zweiten Schaltstellung (S2) der Ablauf (20) der ersten Hydraulikkammer (14) mit der Versorgungsquelle (P) verbunden ist,
wobei den Hydraulikkammern (14, 15) jeweils ein Rückschlagventil (18, 19) zugeordnet ist, welches ein Zuführen von Hydraulikflüssigkeit in die Hydraulikkammern (14, 15) ermöglicht und ein Abführen von Hydraulikflüssigkeit von den Hydraulikkammern (14, 15) verhindert,
wobei,
die Hydraulikkammern (14, 15) derart verbunden sind, dass in der zweiten Schaltstellung (S2) Hydraulikflüssigkeit aus der ersten Hydraulikkammer (14) in die zweiten Hydraulikkammer (15) direkt und über Mittel zum definierten Druckabfall in die zweite Hydraulikkammer (15) leitbar ist, wobei die Mittel in der hydraulischen Verbindung zwischen der ersten Hydraulikkammer (14) und der zweiten Hydraulikkammer (15) angeordnet sind, und wobei ein Kammervolumen der zweiten Hydraulikkammer (15) kleiner als ein Kammervolumen der ersten Hydraulikkammer (14) ist, **dadurch gekennzeichnet, dass** die zweite Hydraulikkammer (15) mittels einer Drossel (28) hydraulisch vorspannbar ist, derart, dass in der zweiten Schaltstellung (S2) überschüssige Hydraulikflüssigkeit über die Drossel (28) in die Lagerschale abführbar ist.

2. Pleuel (1) nach Anspruch 1, **dadurch gekennzeichnet, dass** die Mittel zum definierten Druckabfall durch das Rückschlagventil (19) der zweiten Hydraulikkammer (15) gebildet sind.

3. Pleuel (1) nach Anspruch 2, **dadurch gekennzeichnet, dass** das Rückschlagventil (19) zum definierten Druckabfall einen begrenzten Hub aufweist.

4. Pleuel (1) nach Anspruch 1, **dadurch gekennzeichnet, dass** die Mittel zum definierten Druckabfall als Blende (30) vorgesehen sind.

5. Pleuel (1) nach Anspruch 4, **dadurch gekennzeichnet, dass** die Blende (30) vor dem Rückschlagventil (19) der zweiten Hydraulikkammer (15) angeordnet ist.

6. Pleuel (1) nach Anspruch 5, **dadurch gekennzeichnet, dass** die Blende (30) zwischen dem Rückschlagventil (19) der zweiten Hydraulikkammer (15) und einem Verzweigungspunkt (29) angeordnet ist, an welchem der Zulauf (17) der zweiten Hydraulikkammer (15) mit dem Ablauf (20) der ersten Hydraulikkammer (14) verbunden ist.

7. Pleuel (1) nach Anspruch 4 oder 5, **dadurch gekennzeichnet, dass** die Blende (30) im Ablauf (20) der ersten Hydraulikkammer (14) vor einem Verzweigungspunkt (29) angeordnet ist, an welchem der Zulauf (17) der zweiten Hydraulikkammer (15) mit dem Ablauf (20) der ersten Hydraulikkammer (14) verbunden ist.

8. Pleuel (1) nach einem der Ansprüche 4 bis 7, **dadurch gekennzeichnet, dass** die Blende (30) in das Rückschlagventil (19) integriert vorgesehen ist.

9. Pleuel (1) nach einem der Ansprüche 4 bis 7, **dadurch gekennzeichnet, dass** die Blende (30) als verjüngte Bohrung im Pleuel (1) angeordnet ist.

10. Pleuel (1) nach einem der Ansprüche 4 bis 7, **dadurch gekennzeichnet, dass** die Blende (30) als Blendeneinsatz im Pleuel (1) angeordnet ist.

11. Pleuel (1) nach einem der Ansprüche 4 bis 10, **dadurch gekennzeichnet, dass** die Blende (30) dergestalt ausgebildet ist, dass ihr Strömungswiderstand im Wesentlichen unabhängig von einer Viskosität der durchströmenden Hydraulikflüssigkeit ist.

12. Pleuel (1) nach einem der vorhergehenden Ansprüche, **dadurch gekennzeichnet, dass** in dem Ablauf (21) der zweiten Hydraulikkammer (15) eine Drosselstelle (26) angeordnet ist.

13. Pleuel (1) nach einem der vorhergehenden Ansprüche, **dadurch gekennzeichnet, dass** das Umschaltventil (5) als hydraulisch betätigbares 4/2-Wege-Ventil ausgebildet ist.

## Claims

1. Connecting rod (1) for an internal combustion engine with variable compression, having an adjusting device (2) for adjusting an effective connecting-rod length, wherein the adjusting device (2) has at least one first hydraulic chamber (14) and one second hydraulic chamber (15), and
wherein both in each case one inlet (16, 17) for the feed of hydraulic fluid into the hydraulic chambers (14, 15) from a supply source (P) and in each case one outlet (20, 21) for the discharge of hydraulic fluid out of the hydraulic chambers (14, 15) are provided,
wherein a switching valve (5) for controlling a hydraulic fluid flow has a piston which is movable in a housing and which is displaceable selectively into a first switching position (S1) or a second switching position (S2),
wherein, in the first switching position (S1), the outlet (21) of the second hydraulic chamber (15) and, in the second switching position (S2), the outlet (20) of the first hydraulic chamber (14) is connected to the supply source (P),
wherein the hydraulic chambers (14, 15) are assigned in each case one check valve (18, 19) which allows a feed of hydraulic fluid into the hydraulic chambers (14, 15) and prevents a discharge of hydraulic fluid from the hydraulic chambers (14, 15),
wherein
the hydraulic chambers (14, 15) are connected such that, in the second switching position (S2), hydraulic fluid from the first hydraulic chamber (14) can be conducted into the second hydraulic chamber (15) directly and into the second hydraulic chamber (15) via means for the defined pressure drop, wherein the means are arranged in the hydraulic connection between the first hydraulic chamber (14) and the second hydraulic chamber (15), and wherein a chamber volume of the second hydraulic chamber (15) is smaller than a chamber volume of the first hydraulic chamber (14), **characterized in that** the second hydraulic chamber (15) can be hydraulically preloaded by means of a throttle (28) such that, in the second switching position (S2), excess hydraulic fluid can be discharged via the throttle (28) into the bearing shell.

2. Connecting rod (1) according to Claim 1, **characterized in that** the means for the defined pressure drop are formed by the check valve (19) of the second hydraulic chamber (15).

3. Connecting rod (1) according to Claim 2, **characterized in that** the check valve (19) for the defined pressure drop has a limited stroke.

4. Connecting rod (1) according to Claim 1, **characterized in that** the means for the defined pressure drop are provided as an orifice (30).

5. Connecting rod (1) according to Claim 4, **characterized in that** the orifice (30) is arranged upstream of the check valve (19) of the second hydraulic chamber (15).

6. Connecting rod (1) according to Claim 5, **characterized in that** the orifice (30) is arranged between the check valve (19) of the second hydraulic chamber (15) and a branching point (29) at which the inlet (17) of the second hydraulic chamber (15) is connected to the outlet (20) of the first hydraulic chamber (14).

7. Connecting rod (1) according to Claim 4 or 5, **characterized in that** the orifice (30) is arranged in the outlet (20) of the first hydraulic chamber (14) upstream of a branching point (29) at which the inlet (17) of the second hydraulic chamber (15) is connected to the outlet (20) of the first hydraulic chamber (14).

8. Connecting rod (1) according to any of Claims 4 to 7, **characterized in that** the orifice (30) is provided so as to be integrated into the check valve (19).

9. Connecting rod (1) according to any of Claims 4 to 7, **characterized in that** the orifice (30) is arranged as a narrowed bore in the connecting rod (1).

10. Connecting rod (1) according to any of Claims 4 to 7, **characterized in that** the orifice (30) is arranged as an orifice insert in the connecting rod (1).

11. Connecting rod (1) according to any of Claims 4 to 10, **characterized in that** the orifice (30) is formed such that its flow resistance is substantially independent of a viscosity of the hydraulic fluid flowing through.

12. Connecting rod (1) according to any of the preceding claims, **characterized in that** a throttle point (26) is arranged in the outlet (21) of the second hydraulic chamber (15).

13. Connecting rod (1) according to any of the preceding claims, **characterized in that** the switching valve (5) is in the form of a hydraulically actuatable 4/2 directional valve.

## Revendications

1. Bielle (1) destinée à un moteur à combustion interne à compression variable, ladite bielle comprenant un dispositif de réglage (2) destiné à régler une longueur de bielle effective, le dispositif de réglage (2) comportant au moins une première chambre hydraulique (14) et une deuxième chambre hydraulique (15) et
une entrée (16, 17) étant prévue pour amener le fluide hydraulique dans les chambres hydrauliques (14, 15) depuis une source d'alimentation (P) et une sortie (20, 21) étant prévue pour évacuer le fluide hydraulique des chambres hydrauliques (14, 15),
une soupape de commutation (5) destinée à commander un écoulement de fluide hydraulique comportant un piston qui est mobile dans un boîtier et qui peut être déplacé facultativement au choix dans une première position de commutation (S1) ou une deuxième position de commutation (S2),
la sortie (21) de la deuxième chambre hydraulique (15) étant reliée, dans la première position de commutation (S1), à la source d'alimentation (P) et la sortie (20) de la première chambre hydraulique (14) étant reliée, dans la deuxième position de commutation (S2), à la source d'alimentation (P),
les chambres hydrauliques (14, 15) étant chacune associée à une soupape anti-retour (18, 19) qui permet d'amener le fluide hydraulique dans les chambres hydrauliques (14, 15) et qui empêche l'évacuation du fluide hydraulique des chambres hydrauliques (14, 15),
les chambres hydrauliques (14, 15) étant reliées de telle sorte que, dans la deuxième position de commutation (S2), le fluide hydraulique peut être amené de la première chambre hydraulique (14) directement dans la deuxième chambre hydraulique (15) et, par le biais de moyens de chute de pression définie, dans la deuxième chambre hydraulique (15), les moyens étant disposés dans la liaison hydraulique entre la première chambre hydraulique (14) et la deuxième chambre hydraulique (15), et le volume de la deuxième chambre hydraulique (15) étant inférieur au volume de la première chambre hydraulique (14),
**caractérisé en ce que** la deuxième chambre hydraulique (15) peut être précontrainte hydrauliquement au moyen d'un restricteur (28) de telle sorte que, dans la deuxième position de commutation (S2), du fluide hydraulique en excès peut être évacué dans le coussinet de palier par le biais du restricteur (28).

2. Bielle (1) selon la revendication 1, **caractérisée en ce que** les moyens de chute de pression définie sont formés par la soupape anti-retour (19) de la deuxième chambre hydraulique (15).

3. Bielle (1) selon la revendication 2, **caractérisée en ce que** la soupape anti-retour (19) a une course limitée pour la chute de pression définie.

4. Bielle (1) selon la revendication 1, **caractérisée en ce que** les moyens de chute de pression définie sont prévus sous forme d'un diaphragme (30).

5. Bielle (1) selon la revendication 4, **caractérisée en ce que** le diaphragme (30) est disposé en amont de la soupape anti-retour (19) de la deuxième chambre hydraulique (15).

6. Bielle (1) selon la revendication 5, **caractérisée en ce que** le diaphragme (30) est disposé entre la soupape anti-retour (19) de la deuxième chambre hydraulique (15) et un point de branchement (29) au niveau duquel l'entrée (17) de la deuxième chambre hydraulique (15) est reliée à la sortie (20) de la première chambre hydraulique (14).

7. Bielle (1) selon la revendication 4 ou 5, **caractérisée en ce que** le diaphragme (30) est disposé dans la sortie (20) de la première chambre hydraulique (14) en amont d'un point de branchement (29) au niveau duquel l'entrée (17) de la deuxième chambre hydraulique (15) est reliée à la sortie (20) de la première chambre hydraulique (14).

8. Bielle (1) selon l'une des revendications 4 à 7, **caractérisée en ce que** le diaphragme (30) est prévu pour être intégré dans la soupape anti-retour (19).

9. Bielle (1) selon l'une des revendications 4 à 7, **caractérisée en ce que** le diaphragme (30) est réalisé sous la forme d'un alésage conique dans la bielle (1).

10. Bielle (1) selon l'une des revendications 4 à 7, **caractérisée en ce que** le diaphragme (30) est réalisé sous la forme d'un insert de diaphragme dans la bielle (1).

11. Bielle (1) selon l'une des revendications 4 à 10, **caractérisée en ce que** le diaphragme (30) est conçu de telle sorte que sa résistance à l'écoulement est sensiblement indépendante à la viscosité du fluide hydraulique qui le traverse.

12. Bielle (1) selon l'une des revendications précédentes, **caractérisée en ce qu'**un point de restriction (26) est disposé dans la sortie (21) de la deuxième chambre hydraulique (15).

13. Bielle (1) selon l'une des revendications précédentes, **caractérisée en ce que** la soupape de commutation (5) est réalisée sous la forme d'une soupape 4/2 à actionnement hydraulique.
